(19) **Europäisches Patentamt**

**European Patent Office**

**Office européen des brevets**

(11) **EP 1 316 574 B1**

(12) **EUROPÄISCHE PATENTSCHRIFT**

(45) Veröffentlichungstag und Bekanntmachung des Hinweises auf die Patenterteilung:
**27.07.2005 Patentblatt 2005/30**

(51) Int Cl.7: **C08G 59/14**, C08G 59/18, C08G 59/40, C08G 59/50, C08G 59/44

(21) Anmeldenummer: **02026324.0**

(22) Anmeldetag: **21.11.2002**

(54) **Wässrige Härter für wässrige Epoxidharzdispersionen**

Aqueous hardeners for aqueous epoxy resin dispersions

Durcisseurs aqueux destines a des dispersions aqueux de resine epoxy

(84) Benannte Vertragsstaaten:
**AT DE FR IT**

(30) Priorität: **30.11.2001 AT 18732001**

(43) Veröffentlichungstag der Anmeldung:
**04.06.2003 Patentblatt 2003/23**

(73) Patentinhaber: **Surface Specialties Austria GmbH**
**8402 Werndorf (AT)**

(72) Erfinder:
• **Feola, Roland, Dr.**
**8045 Graz (AT)**

• **Paar, Willibald, Dr.,**
**8010 Graz (AT)**
• **Gmoser, Johann**
**8045 Graz (AT)**

(74) Vertreter: **Deckers, Hellmuth, Dr.**
**European Patent Attorney,**
**Bahnhofstrasse 26/A**
**55218 Ingelheim (DE)**

(56) Entgegenhaltungen:
US-A- 4 064 090     US-A- 4 992 525
US-A- 5 489 455     US-A- 5 648 171
US-A- 5 688 877

**Beschreibung**

Die Erfindung betrifft wäßrige Härter für wäßrige Epoxidharzdispersionen.

Aus Gründen des Umweltschutzes werden lösungsmittelhaltige Beschichtungssysteme zunehmend von wäßrigen Systemen verdrängt. Dabei werden jedoch häufig die günstigen Eigenschaften der bekannten lösungsmittelhaltigen Systeme von den wäßrigen Lacken noch nicht erreicht.

In der Patentanmeldung EP-A 0 288 942 (US 4,992,525) wird ein Verfahren beschrieben zur Herstellung von kationischen Harzen, die nach Protonisierung wasserverdünnbar sind, basierend auf mit Phosphorsäure modifizierten Epoxidharzen, bei dem zunächst entweder (A1) 1 mol ortho-Phosphorsäure mit 2 mol einer Monoepoxidverbindung umgesetzt wird, oder (A2) 1 mol einer Polyphosphorsäure (des Polymerisationsgrades n) mit (n - 1) mol eines Monoalkohols mit mindestens 4 Kohlenstoffatomen und danach mit (n + 1) mol einer Monoepoxidverbindung umgesetzt wird, wobei in jedem Fall ein Diester der ortho-Phosphorsäure entsteht, der noch eine acide H-Gruppe aufweist, sodann (B) die gemäß A1 oder A2 erhaltenen Diester mit mindestens einer Oxirangruppe einer Mono- oder Poly-Epoxidverbindung reagiert werden bis zu einer Säurezahl von unter 5 mg/g, und anschließend (c) sämtliche nach (B) verbliebenen Oxirangruppen weiter umgesetzt werden mit primären oder sekundären Aminen oder mit Mischungen aus tertiären Aminen und Säuren; oder die nach dem Schritt B vorhandenen Hydroxylgruppen werden mit basischen oder ungesättigten Monoisocyanaten umgesetzt, wobei sich ein mit Phosphorsäure modifiziertes Epoxidharz bildet, das nach Protonisierung mit Wasser verdünnt wird.

In der Anmeldung EP-A 0 736 053 wird eine Methode beschrieben, die Zeit für die Härtung eines mit Aminen gehärteten Epoxidharzes zu verlängern, indem das Epoxidharz in Gegenwart des Esters einer Säure gehärtet wird, die die Aminogruppen des aminischen Härters zu alkylieren vermag.

Aus der EP-B 0 000 605 sind wäßrige Härtungsmittel für wäßrige Epoxidharz-Dispersionen bekannt, die durch Umsetzung von Additionsprodukten aus Polyalkylenpolyäther-Polyolen und wasserunlöslichen Polyepoxidverbindungen mit Polyaminen hergestellt werden, wobei an die reaktiven Gruppen der Polyamine noch zur Addition befähigte, ungesättigte Verbindungen addiert sind.

In der EP-B 0 387 418 wird versucht, die schwierige Synthese eines polyäthermodifizierten Harzvorproduktes zu vereinfachen, indem von aminoterminierten Polyätherglykolen ausgegangen wird. Das Vorprodukt wird in einer zweiten Stufe - völlig analog zu EP-B 0 000 605 - mit einem Überschuß an Polyaminen zu Addukten umgesetzt.

In der EP-A 0 567 831 werden wäßrige Härtungsmittel beschrieben, bestehend aus einem Emulgator, der hergestellt wird aus einem aminoterminierten Polyalkylenpolyäther, einem aliphatischen Diglycidyläther und einem Fettamin, einem Coemulgator, hergestellt aus einem Polyamin, einem aliphatischen Diglycidyläther und einem Fettamin, sowie einem Bisamin-addukt aus Epoxidharz und einem Polyamin.

Diese bekannten Systeme führen in Kombination mit handelsüblichen wäßrigen Dispersionen von Epoxidharzen zu Beschichtungen, die vor allem in der Korrosionsbeständigkeit noch verbesserungswürdig sind.

Es ist ebenfalls bekannt, daß Umsetzungsprodukte von Epoxidharzen mit Phosphorsäure oder organischen Phosphonsäuren zu wäßrigen Beschichtungsmitteln verarbeitet werden können, die zu Beschichtungen mit guter Korrosionsbeständigkeit führen. Solche wäßrigen Harze werden jedoch mit Härtern gehärtet, die erst bei höherer Temperatur wirksam werden (Einbrennsysteme).

Es lassen sich phosphorhaltige aminische Härter formulieren, indem Epoxid-Amin-Addukte mit Phophorsäure umgesetzt werden. Bei dieser Umsetzung ergibt sich ein Kristallbrei, der im Labormaßstab beherrscht werden kann und nach einiger Zeit unter kräftigem Rühren in eine viskose Masse übergeht. Eine derartige Reaktion ist jedoch im technischen Maßstab sehr problematisch, da es zu Stillstand des Rührorgans und zu lokaler Überhitzung kommen kann.

Es besteht daher die Aufgabe, phosphorhaltige aminische Härter für wäßrige Epoxidharz-Dispersionen bereitzustellen, die in technischem Maßstab problemlos herstellbar sind und in wäßrigen Systemen gemeinsam mit wäßrigen Epoxidharzen zu Beschichtungsmitteln formuliert werden können, die bei Raumtemperatur oder nur geringfügig erhöhter Temperatur härten und einen verbesserten Korrosionsschutz ergeben.

Diese Aufgabe wird gelöst, indem teilweise veresterte Phosphorsäuren oder organische Phosphonsäuren mit aminischen Härtern ausgewählt aus Epoxid-Amin-Addukten, Mannich-Basen, Polyamidoaminen und Kondensationsprodukten von Di- oder Polyaminen mit Di- oder Polyhydroxyaromaten unter Addition und/oder Salzbildung umgesetzt werden. Während der gesamten Umsetzung liegt die Reaktionsmassse stets als homogenes flüssiges viskoses System vor, das problemlos beherrscht werden kann.

Gegenstand der Erfindung sind daher Mischungen, Additionsprodukte und/oder Salze von teilweise veresterten Phosphorsäuren **A1** oder teilweise veresterten organischen Phosphonsäuren **A2** mit organischen Aminen **B** ausgewählt aus Epoxid-Amin-Addukten **B1,** Mannich-Basen **B2,** Polyamidoaminen **B3** und Kondensationsprodukten **B4** von Di- oder Polyaminen **B42** mit Di- oder Polyhydroxyaromaten **B41**.

Die teilweise veresterten Phosphorsäuren **A1** oder teilweise veresterten organischen Phosphonsäuren **A2** weisen mindestens ein acides H-Atom auf, das direkt oder über ein Sauerstoffatom an das Phosphoratom gebunden ist, und mindestens eine Gruppierung der Art R-O-P, wobei R ein lineares, verzweigtes oder cyclisches Alkyl- oder Aryl-Radikal mit 1 bis 20 Kohlenstoffatomen bedeutet, das auch ätherartig gebundenen Sauerstoff in der Kette enthalten kann. Die Phosphorsäuren sind dabei ausgewählt aus ortho-Phosphorsäure $H_3PO_4$, der Diphosphorsäure $H_4P_2O_7$, der Triphosphorsäure $H_5P_3O_{10}$ und den höheren Homologen (Oligomeren), der phosphorigen Säure $H_3PO_3$, der diphosphorigen Säure $H_4P_2O_5$ sowie deren höheren Homologen, sowie der unterphosphorigen Säure $H_3PO_2$ und deren höheren Homologen. Besonders geeignet sind ortho-Phosphorsäure, Gemische von Di- und höheren Oligomeren der ortho-Phosphorsäure, phosphorige Säure und deren höhere Oligomere. Die organischen Phosphonsäuren sind insbesondere Alkanphosphonsäuren $R^1$-$PO_3H_3$, aromatische Phosphonsäuren $R^2$-$PO_3H_3$, und die entsprechenden Phosphonigsäuren $R^1$-$PO_2H_2$ und $R^2$-$PO_2H_2$, wobei $R^1$ ein linearer, verzweigter oder cyclischer Alkylrest mit 1 bis 20 Kohlenstoffatomen ist, und $R^2$ ein gegebenenfalls substituierter aromatischer Rest mit 6 bis 20 Kohlenstoffatomen ist. Besonders geeignet sind Methanphosphonsäure und Benzolphosphonsäure. Unter den teilweise veresterten Phosphorsäuren bzw. Phosphonsäuren werden der ortho-Phosphorsäure-Monoester mit Methanol, Äthanol, n-Propanol, iso-Propanol, n-Butanol, 2-Butoxyäthanol und 2-(2-Butoxy- äthoxy)-äthanol bevorzugt.

Die teilweise veresterten Phosphor- bzw. Phosphonsäuren werden hergestellt, indem die betreffende Polyphosphorsäure in einem kühl- und heizbaren Behälter mit Rührorgan vorgelegt wird, und der Veresterungsalkohol bei Raumtemperatur, gegebenenfalls unter Kühlung, langsam in einem Zeitraum bevorzugt zwischen 30 Minuten und 3 Stunden zugesetzt wird. Die Temperatur steigt dabei durch die Reaktionswärme auf einen Wert zwischen 40 und 90 °C. Nach beendeter Zugabe läßt man noch mindestens 3 Stunden nachrühren. Die gebildeten Ester sind üblicherweise klare, zähe Flüssigkeiten. Werden monomere Phosphorsäuren oder Phosphonsäuren eingesetzt, so ist eine Entfernung des Reaktionswassers bei der Veresterung erforderlich.

Soweit die Epoxid-Amin-Addukte **B1** noch Epoxidgruppen aufweisen, können diese mit den Phosphorsäuren **A1** bzw. mit den Phosphonsäuren **A2** unter Ringöffnung und Addition reagieren. Es ist jedoch bevorzugt, daß die Addukte **B1** keine unreagierten Epoxidgruppen mehr aufweisen. Die Epoxid-Amin-Addukte **B1** sind Reaktionsprodukte aus aliphatischen oder aromatischen Epoxidharzen **B11** mit einem spezifischen Gehalt an Epoxidgruppen von 0,2 bis 7 mol/kg, insbesondere Epoxidharzen auf Basis von Bisphenol A, Bisphenol F, deren Mischungen, und auf Basis von Polypropylenglykol, mit aliphatischen Aminen **B12,** bevorzugt solchen mit mindestens zwei primären Aminogruppen und mit 2 bis 20 Kohlenstoffatomen. Bevorzugte Amine sind die diprimären Alkandiamine mit endständigen Aminogruppen wie Äthylendiamin, 1,3-Diaminopropan, 1,4-Diaminobutan, 1,6-Diaminohexan, Diäthylentriamin, Triäthylentetramin, Tetraäthylenpentamin, und die von den anderen genannten Diaminen abgeleiteten Polyalkylenpolyamine wie beispielsweise N-(4-Aminobutyl)-1,4-diaminobutan. Die Epoxidharze **B11** und die Amine **B12** werden bevorzugt in solchen Mengen eingesetzt, daß die Anzahl der primären Aminogruppen in **B12** mindestens das 1,5-fache der Anzahl der Epoxidgruppen in **B11** ist. Bevorzugt beträgt das Verhältnis der Anzahl der primären Aminogruppen zu der der Epoxidgruppen 1,8 bis 3, insbesondere 1,9 bis 2,6. Dabei können auch Gemische von Epoxidharzen **B11** und/oder von Aminen **B12** eingesetzt werden.

Die Herstellung der Epoxid-Amin-Addukte erfolgt beispielsweise durch Umsetzung von 2 mol eines aliphatischen diprimären Amins wie Diäthylentriamin mit 1 mol eines aromatischen Diepoxidharzes (z. B. mit spezifischem Epoxidgruppengehalt von 5,26 mol/kg; "EEW" ca. 190 g/mol). Es wird dabei das Diamin vorgelegt und auf ca. 80 °C erwärmt. Man gibt unter Rühren langsam das Diepoxidharz dazu, wobei die sofort einsetzende stark exotherme Reaktion durch Kühlen auf max. 100 °C begrenzt wird. Nach Ende der Epoxidharz-Zugabe hält man noch 1 h bei 80 bis 100 °C, um die Reaktion zu vervollständigen.

Die Mannich-Basen **B2** sind Umsetzungsprodukte von phenolischen Verbindungen **B21,** die auch mehrkernig sein können und bevorzugt ein oder mehrere $C_1$- bis $C_{10}$-Alkylsubstituenten tragen, Formaldehyd **B22** und mehrfunktionellen Aminen **B23,** insbesondere Diaminen mit primären Aminogruppen, die an aliphatische Kohlenstoffatome gebunden sind. Neben den primären Aminogruppen können die Amine **B23** auch weitere sekundäre und/oder tertiäre Aminogruppen enthalten. Bevorzugt sind die diprimären linearen, verzweigten und cyclischen aliphatischen Diamine und araliphatische Diamine, bei denen die Aminogruppen mit aliphatischen C-Atomen verbunden sind Besonders bevorzugte Diamine sind 1,2-Diaminoäthan, 1,2-Diaminopropan, 1,3-Diaminopropan, 1,4-Diaminobutan und höhere Homologe, sowie 2-Methyl-1,5-diaminopentan, 1,3-Diaminopentan, 2,2,4-Trimethyl-1,6-diaminohexan, 2,4,4-Trimethyl-1,6-diaminohexan, 1-Amino-3-aminomethyl-3,5,5-trimethylcyclohexan (Isophorondiamin), 2,2-Dimethyl-1,3-diaminopropan, 1,3-Bis(aminomethyl)cyclohexan, 1,2- und 1,4-Diaminocyclohexan, Bis(4-aminocyclohexyl)-methan, Bis(4-amino-3-methylcyclohexyl)methan, 3-Azapentan-1,5-diamin, 4-Azaheptan-1,7-diamin, 3,6-Di-azaoctan-1,8-diamin, 3(4),8(9)-Bis(aminomethyl)tricyclo[5.2.1.0$^{2,6}$]-decan, 3-Methyl-3-azapentan-1,5-diamin, N-Aminoäthylpiperazin, Polyätheramine wie die durch Cyanäthylierung von Glykolen oder Polyolen und anschließende Hydrierung erhältlichen, beispielsweise 1,12-Diamino-4,8-dioxadodecan, Polyoxypropylendiamine wie die kommerziell erhältlichen Produkte Jeffamine ® D-230, Jeffamine ® D-400, Jeffamine® T-403 (Produkte der Huntsman Chemical Company) und 2-Butyl-2-äthyl-1,5-diaminopentan. Ebenfalls bevorzugt sind araliphatische Polyamine, bei denen die aliphatischen C-Atome die Aminogruppen tragen, wie 1,3-Bis(aminomethyl)benzol, 1,3-Bis(2-amino-isopropyl)benzol und Gemische der genannten araliphatische Diamine untereinander und mit anderen Polyaminen. Bevorzugte phenolische Verbindungen **B21** sind Phenol selbst, Alkylphenole wie o-, m- und p-Kresol, 2,4-Xylenol, p-tert.-Butylphenol, die gemischten Methyl-Butyl-Phenole, p-Nonylphenol, sowie Bis-(4-hydroxyphenyl)methan, Bisphenol A, 3,3',5,5'-Tetramethylbisphenol A, Resorcin, Brenzkatechin und Pyrogallol. Anstelle von Formaldehyd (üblicherweise wird wäßrige Formaldehydlösung eingesetzt) kann man auch Paraformaldehyd oder Formaldehyd-abspaltende Verbindungen wie Trioxan einsetzen.

Die Herstellung dieser Mannich-Basen erfolgt beispielsweise so, daß man 1 mol eines aliphatischen Diamins wie Triäthylentetramin in einem geeigneten Reaktionsgefäß auf ca. 50 °C erwärmt und dann unter Rühren 1 mol Paraformaldehyd (91%) portionsweise so zugibt, daß die auftretende Exothermie gut beherrschbar bleibt. Die Dauer der Zugabe beträgt dabei etwa 1 Stunde, wobei die Temperatur auf maximal 60 °C steigen soll, dazu ist zeitweises Kühlen erforderlich. Nach Ende der Zugabe hält man noch 1 Stunde bei 60 °C und gibt anschließend 1 mol des Phenols dazu. Man läßt die Temperatur durch die auftretende Exothermie bis auf ca. 80 °C steigen, hält bei dieser Temperatur noch 30 Minuten und destilliert unter vermindertem Druck bei ca. 75 bis 80 °C das sich bildende Reaktionswasser (1 mol) ab.

Dia Polyamidoamine **B3** sind Polykondensate aus mehrbasigen Carbonsäuren **B32**, bevorzugt aliphatischen Dicarbonsäuren mit aliphatischen Di- oder Polyaminen **B31**, wobei die Zahl der zum Amid kondensierbaren Aminogruppen die der Carboxylgruppen übersteigt. Die mehrbasigen Carbonsäuren **B32** sind ausgewählt aus den sogenannten "Dimer-Fettsäuren", die durch Polymerisation von mindestens einfach ungesättigten natürlichen und synthetischen Fettsäuren mit 12 bis 26 Kohlenstoffatomen in bekannter Weise erhältlich sind, wobei die technisch verfügbaren Produkte stets Gemische von (dimeren) Dicarbonsäuren (60 bis 80 % der Masse der Mischung), Tricarbonsäuren und höheren Polycarbonsäuren (10 bis 35 %) und nicht umgesetzten Monomeren (5 bis 15 %) sind, und aliphatischen linearen und verzweigten, cycloaliphatischen und aromatischen Di- und Polycarbonsäuren mit 6 bis 36 Kohlenstoffatomen, insbesondere Adipinsäure, Azelainsäure, Sebacinsäure, Dodecandisäure, Brassylsäure (Tridecandisäure) und Trimethyladipinsäure, 1,3- und 1,4-Cyclohexandicarbonsäure und Phenylendiessigsäure. Die Aminverbindungen **B31** sind ausgewählt aus Polyäthylenpolyaminen wie Diäthylentriamin, Triäthylentetramin, Tetraäthylenpentamin usw., den dazu homologen Polypropylenpolyaminen, und den unter **B23** genannten primären Diaminen, wobei die beiden ersten Gruppen sowie Mischungen der entsprechenden Verbindungen untereinander bevorzugt sind.

Die Polyaminoamide werden in bekannter Weise hergestellt, indem man beispielsweise 2 mol eines Diamins, wie Diäthylentriamin, vorlegt und unter Rühren 1 mol einer Dicarbonsäure, bevorzugt einer gesättigten Dimerfettsäure (Dimerisat einer Fettsäure oder Fettsäuremischung, d. i. gesättigte aliphatische langkettige Dicarbonsäure, deren molare Masse beispielsweise ca. 570 g/mol beträgt) zugibt. Unter Ausnutzung der auftretenden leichten Exothermie (Neutralisation) wird innerhalb von 3 bis 4 Stunden auf 200 bis 210 °C geheizt. Bei etwa 140 °C beginnt die Abscheidung von Reaktionswasser. Man hält so lange bei 200 bis 210 °C, bis insgesamt 2 mol Reaktionswasser abgeschieden sind.

Die Kondensationsprodukte **B4** sind Umsetzungsprodukte von Di- oder Polyhydroxyaromaten mit mindestens zwei phenolischen Hydroxylgruppen und 6 bis 20 Kohlenstoffatomen, **B41** und Di- oder Polyaminen **B42.**

Die für die Erfindung geeigneten Di- und Polyhydroxyaromaten **B41** leiten sich ab von ein- oder mehrkernigen Aromaten, wobei die mehrkernigen Aromaten anellierte Ringe aufweisen können. Geeignet sind auch solche Di- und Polyhydroxyaromaten, bei denen mehrere aromatische Einheiten wie Benzol-, Naphthalin-, Anthracen- oder auch Heteroaromaten-Einheiten verbunden sind mit direkten Kohlenstoff-Kohlenstoff-Bindungen oder durch zweibindige Brücken wie $\alpha,\omega$-Alkylenreste, Alkylenreste, deren beide Bindungsstellen am selben Kohlenstoffatom sind, mit jeweils 1 bis 12 Kohlenstoffatomen im Alkylenrest, der gegebenenfalls auch äthylenisch ungesättigt sein kann wie z.B. cis- oder trans-1,2-Äthendiyl-, sowie Äther-, Thioäther-, Azo-, Carbonamid-, Carbonyl-, Carbonyloxy-, Sulfon- und Sulfoxid-Brücken. Es ist auch möglich Polyhydroxyaromaten einzusetzen, die mindestens zwei Hydroxylgruppen aufweisen, wobei jede der Hydroxylgruppen an einen verschiedenen aromatischen Kern gebunden ist. Beispiele für mehrkernige Polyhydroxyaromaten, bei denen die Hydroxylgruppen an verschiedene aromatischen Kernen gebunden sind, sind 2,2'- und 4,4'-Dihydroxydiphenyl, 2,2'- und 4,4'-Dihydroxydiphenyläther, 2,2'- und 4,4'-Dihydroxydiphenylsulfon, 4,4'-Dihydroxystilben und 4,4'-Dihydroxybenzophenon. Weitere Beispiele geeigneter Verbindungen sind Hydrochinon, Brenzcatechin, Resorcin, Pyrogallol, Phloroglucin, 1,4- und 1,5-Dihydroxynaphthalin, 2,3-, 2,6- und 2,7-Dihydroxynaphthalin und alkylierte und aralkylierte Di- oder Polyhydroxyaromaten, wie sie z.B. in der Patentanmeldung EP-A 0 698 591 (DE-A 44 36 097) beschrieben worden sind. Bevorzugt sind dabei Di- und Trihydroxyaromaten, insbesondere solche, bei denen sich die Hydroxylgruppen am selben aromatischen Ring befinden. Besonders bevorzugt sind Dihydroxyaromaten, insbesondere Resorcin und substituierte Resorcine, hergestellt nach dem Verfahren dieser Patentanmeldung.

Diese besonders bevorzugten Verbindungen **B41** sind ausgewählt aus Resorcin und mindestens einfach substituierten Resorcinen, deren Substituenten ausgewählt sind aus linearen, verzweigten oder cyclischen Alkylgruppen abgeleitet von Olefinen mit 4 bis 16 Kohlenstoffatomen und Aralkylgruppen abgeleitet von Styrol und dessen Homologen wie $\alpha$-Methylstyrol, den isomeren Vinyltoluolen und deren technischer Mischung, den isomeren Äthylstyrolen, Inden und den halogenierten Styrolen wie Mono- und Dichlorstyrol. Diese substituierten Resorcine werden durch Umsetzung von Resorcin und linearen, verzweigten oder cyclische Olefinen bzw. den genannten Alkenylaromaten im Sinne einer elektrophilen Addition in Gegenwart eines Katalysators enthaltend Oxalsäure und Borsäure im Stoffmengenverhältnis von 1 mol: 5 mol bis 1 mol: 0 mol hergestellt. Besonders bevorzugt ist dabei styrolisiertes Resorcin, das mindestens einen 2-Phenyläthyl-Substituenten aufweist, sowie dessen Mischungen mit unsubstituiertem Resorcin.

Die Polyamine **B42** umfassen die bereits unter **B23** genannten; weiterhin kommen auch die Polyamidoamine **B3** und die Epoxid-Amin-Addukte **B1** als Reaktionspartner für die Verbindungen **B41** in Frage. Alle hier genannten Polyamine können einzeln oder im Gemisch eingesetzt werden.

Die Bucherer-Reaktion des Di- oder Polyhydroxyaromaten **B41** mit dem Polyamin **B42** verläuft wie folgt: das Gemisch aus Di- oder Polyhydroxyaromaten **B41,** Polyamin **B42**, gegebenenfalls ein Schleppmittel und gegebenenfalls ein Katalysator wird auf 150 bis 230 °C unter Abspaltung und gleichzeitigem Abdestillieren von Reaktionswasser erwärmt. Anschließend erfolgt eine Destillation des Schleppmittels und des Restwassers unter vermindertem Druck (typisch 5 bis 20 kPa = 50 bis 200 mbar) bei 100 bis 130 °C. Das Stoffmengenverhältnis der Komponenten **B41** und **B42** beträgt von 10,0 zu 1,0 mol/mol bis 1,0 zu 10,0 mol/mol.

Als Schleppmittel können verwendet werden: alle Kohlenwasserstoffe mit einem Siedepunkt bei Normaldruck über 50 °C, und einem Schmelzpunkt unter 20 °C, die ein Azeotrop mit Wasser bilden wie: Hexan, Cyclohexan, Petroläther, Ligroin, Toluol, Xylol, ®Shellsol-Typen, Hersteller Shell Chemicals, und ®Solvesso-Typen, Hersteller Esso AG (Kohlenwasserstoff-Destillationsschnitte, die bei der Destillation von Erdöl anfallen; Mischungen von alkylierten Aromaten), sowie Tetrahydronaphthalin und Dekalin, ferner alle Alkohole mit einem Siedepunkt unter 200 °C bei Normaldruck, die ein Azeotrop mit Wasser bilden, und mindestens vier Kohlenstoffatome pro Molekül enthalten. Das Massenverhältnis von Schleppmittel (Kohlenwasserstoff(-gemisch) oder Alkohol(-gemisch)) zum Gemisch aus Di- oder Polyhydroxyaromaten **B41** mit dem Polyamin **B42** beträgt dabei von 1,0 zu 0,1 g/g bis 1,0 zu 10,0 g/g. Es können auch Mischungen aus Kohlenwasserstoffen und Alkoholen eingesetzt werden.

Als Katalysatoren für die oben beschriebene Reaktion kommen in Frage: Alkali- und Erdalkalisulfite, Alkali- und Erdalkalidithionite, Borsäure, Sulfonsäuren wie p-Toluolsulfonsäure oder Naphthylsulfonsäure, Oxalsäure, Jod, sowie Kombinationen von (i) Salzen von aliphatischen Carbonsäuren ausgewählt aus olefinisch ungesättigten und gesättigten linearen, verzweigten und cyclischen Mono- und Di-Carbonsäuren mit 2 bis 40 Kohlenstoffatomen wie Ameisensäure, Oxalsäure, Essigsäure, Propionsäure, natürlichen Fettsäuren, 2-Äthylhexansäure, verzweigten Monocarbonsäuren, die nach dem Verfahren von Koch aus Olefinen gewonnen werden, und die unter dem Namen ®Versatic-Säuren (Shell Chemicals) angeboten werden, zusammen mit (ii) Schwermetallionen abgeleitet von z.B. Eisen, Kobalt, Zinn, Zink, Mangan, Kupfer und Vanadium. Bezogen auf die Masse des Gemisches aus Di- oder Polyhydroxyaromat **B41** und Polyamin **B42** mit dem Katalysator beträgt der Massenanteil an Katalysator von 0,1 bis 5 %, bevorzugt 0,2 bis 4 %. Es können auch Kombinationen aus oben genannten Katalysatoren verwendet werden.

Die Umsetzung der teilweise veresterten Phosphor- bzw. Phosphonsäuren **A** mit den aminischen Verbindungen **B** erfolgt durch Erwärmen der aminischen Verbindungen **B** auf ca. 130 bis ca. 200 °C, Zugabe der Säuren **A** unter guter Durchmischung und weiteres Rühren in dem angegeben Temperaturbereich während einer bis 4 Stunden. Die erhaltene Masse wird dann auf ca. 80 bis ca. 120 °C abgekühlt, ein Lösungsmittel ausgewählt aus mit Wasser mischbaren aliphatischen Ätheralkoholen, Ätherestern und Ketonen wird in einer solchen Menge zugefügt, daß einen Lösung mit einem Festkörper-Massenanteil von 65 bis 90 % resultiert, die dann durch Zugabe von Wasser auf einen Festkörper-Massenanteil in der wäßrigen Zubereitung von ca. 35 bis 55 % verdünnt wird.

Die Mengenverhältnisse der Komponenten **A** und **B** werden bevorzugt so gewählt, daß das Verhältnis der Stoffmenge der primären Aminogruppen in **B** zur Stoffmenge der Komponente **A** 1 : 0,1 bis 1 : 0,5 mol/mol beträgt, besonders bevorzugt 1 : 0,15 bis 1 : 0,4 mol/mol.

Die so erhaltenen wäßrigen Härter lassen sich mit beliebigen wäßrigen Epoxidharz-Dispersionen kombinieren. Dabei werden die Mengen von Harz und Härter bevorzugt so gewählt, daß das Verhältnis der Stoffmenge an Aminwasserstoffatomen im Härter zu der Stoffmenge an Epoxidgruppen im Harz ca. 0,7 bis 0,85 mol/mol beträgt, besonders bevorzugt ist ein Verhältnis von 0,72 bis 0,80 mol/mol.

Mit den erfindungsgemäßen Härtern in Kombination mit wäßrigen Epoxidharz-Dispersionen lassen sich Klarlacke herstellen, die ausgezeichneten Korrosionsschutz auf Metalloberflächen bewirken. Dabei kann auf eine Vorbehandlung der Metalle wie z. B. durch Phosphatieren ganz oder weitgehend verzichtet werden. Die Aushärtung der Lacke kann bereits bei Raumtemperatur erfolgen. Es ist auch möglich, übliche Pigmente, Füller, und Zusatzstoffe wie Antischaummittel, Egalisierhilfsmittel und Antiabsetzmittel zu den damit formulierten Lacken zuzusetzen.

Die Erfindung wird durch die nachfolgenden Beispiele erläutert:

**Beispiele:**

**Synthese der Phosphorsäureester**

**Phosphorsäureester PE1**

84 g (1,0 mol*) Polyphosphorsäure wurden in einem Reaktionsgefäß, ausgestattet mit Rührer, Heizung und

* $H_{n+2}P_nO_{3n+1}$, n≈4 ⇒ mittlere molare Masse pro acidem H-Atom $M_n$ = 84 g/mol

**5**

Rückflußkühler, vorgelegt.

Bei 20 °C wurden unter Rühren 74 g (1,0 mol) 1-Butanol innerhalb 1 Stunde kontinuierlich zugetropft. Man ließ die Temperatur durch Exothermie auf 60 °C steigen und hielt nach Ende der Zugabe noch 3 Stunden bei dieser Temperatur. Man erhielt ein gelbbraunes, klares Produkt.

| Säurezahl | 720 mg/g |
|---|---|
| Dynamische Viskosität bei 23 °C | 30 mPa·s |

**Phosphorsäureester PE2**

Es wurde in gleicher Weise wie unter PE1 verfahren, als Alkoholkomponente wurden jedoch diesmal 162 g (1,0 mol) Butyldiglykol eingesetzt.

Man erhielt ein klares, farbloses Produkt.

| Säurezahl | 406 mg/g |
|---|---|
| Dynamische Viskosität bei 23 °C | 700 mPa·s |

**Herstellung von modifizierten Epoxid-Amin-Addukten als Härter**

Die Härter H1 bis H6 wurden entsprechend den in der Tabelle 1 zusammengestellten Rezepturen hergestellt. Die Abkürzungen bedeuten dabei:

EP1      Diepoxidharz auf Basis von Bisphenol A (SEG= 5,26 mol/kg; EEW ca. 190 g/mol)
EP2      Diepoxidharz auf Basis von Bisphenol A (SEG= 2,11 mol/kg; EEW ca. 475 g/mol)
EP3      Diepoxidharz auf Basis von Polypropylenglykol (SEG= 3,13 mol/kg; EEW ca. 320 g/mol)
EDA      Äthylendiamin (molare Masse 60 g/mol)
DETA      Diäthylendiamin (molare Masse 103 g/mol)
TETA      Triäthylentetramin (molare Masse 146 g/mol)
PS      ortho-Phosphorsäure (molare Masse 98 g/mol)
PE1      ortho-Phosphorsäure-Monobutylester, hergestellt durch Umsetzung von äquimolaren Mengen von Phosphorsäure und 1-Butanol (molare Masse $M$ = 158 g/mol)
PE2      ortho-Phosphorsäure-Mono-2-(2-butoxyäthoxy)-äthylester, hergestellt durch Umsetzung von äquimolaren Mengen Polyphosphorsäure mit Butyldiglykol (mittlere molare Masse $M^*$ = 246 g/mol)

wobei die mittlere molare Masse M* definiert ist als

$$M^* = \frac{M(\mathrm{H_{n+2}P_nO_{3n+1}})}{n} - M(\mathrm{H_2O}) + M(\text{Alkohol}), \; n \approx 4$$

FS1      Dimerfettsäure gesättigt (molare Masse = 568 g/mol; Dicarbonsäure)
FS2      Tallölfettsäure (molare Masse = 280 g/mol; Monocarbonsäure)

Dabei wurde wie folgt verfahren:

**Beispiel H1** (Umsetzung eines Epoxid-Amin-Addukts mit Phosphorsäureester PE1)

In einem Reaktionsgefäß, ausgestattet mit Rührer, Heizung, Wasserabscheider und Rückflußkühler wurden 206 g (2,0 mol) Diäthylentriamin vorgelegt. Bei 80 °C wurden während 1 Stunde unter Rühren 380 g (2,0 mol Epoxidgruppen) Diepoxidharz EP1 zugegeben. Nach Ende der Zugabe wurde noch 1 h bei 80 °C gehalten, wonach praktisch keine Epoxidgruppen mehr nachzuweisen sind.

Anschließend wurden bei 170 °C 32 g (0,2 mol) des Phosphorsäureesters PE1 zugegeben. Man hielt so lange bei dieser Temperatur, bis eine fast klare Masse entstanden war. Während der gesamten Reaktion war die Masse problemlos rührbar. Das anfallende Kondensat wurde abgetrennt und verworfen. Es wurde auf 80 °C abgekühlt und portionsweise mit Wasser auf einen Festkörper-Massenanteil von 50 % verdünnt.

Eigenschaften der Härterlösung:

| Dynamische Viskosität bei 23 °C | 6800 mPa·s |
| spezifischer Gehalt an Amin-Wasserstoffatomen | 6,2 mol/kg (berechnet) |
| (sog. "HAV", Masse bezogen auf die Stoffmenge von Amin-Wasserstoffatomen | 162 g/mol) |

**Beispiel H4** (Umsetzung eines Epoxid-Amin-Adduktes mit Phosphorsäure PS)

Es wurde wie im ersten Absatz des Beispiels 1 verfahren.

Bei Zugabe von 32 g einer 75 %igen wäßrigen Phosphorsäurelösung (0,25 mol) bei 170 °C anstelle des Esters entstand zunächst eine kristallin-breiige Masse. Es wurde innerhalb einer Stunde bis auf 200 °C erwärmt und bei dieser Temperatur solange gehalten, bis kein Wasser-Destillat mehr anfiel (insgesamt ca. 9 g). Man erhielt eine trübe, aber homogene und gut rührbare Masse. Nach Abkühlen auf 95 °C wurde mit Wasser portionsweise auf einen Festkörper-Massenanteil von 45 % verdünnt.

Eigenschaften der Härterlösung:

| Dynamische Viskosität bei 23 °C | 8450 mPa·s |
| spezifischer Gehalt an Amin-Wasserstoffatomen | 4,1 mol/kg (berechnet) |
| (sog. "HAV", Masse bezogen auf die Stoffmenge von Amin-Wasserstoffatomen | 242 g/mol) |

**Phosphorsäuremodifizierte Polyaminoamide**

**Beispiele H7 bis H9** (Umsetzung von Polyamidoaminen mit Phosphorsäure bzw. Phosphorsäureester)

In den Beispielen H7 bis H9 (Rezepturen in Tabelle 1) wird zunächst durch Reaktion von Polyaminen mit einer mehrbasigen Fettsäure FS1 bzw. Gemischen von FS1 und einer einbasigen Fettsäure ein Polyamidoamin hergestellt, das anschließend mit Phosphorsäure (Beispiele H7 und H8) bzw. einem Phosphorsäureester (Beispiel H9) umgesetzt wird. Im einzelnen wird so verfahren:

**Beispiel H7** (Umsetzung mit Phosphorsäure)

In einem Reaktionsgefäß, ausgestattet mit Rührer, Heizung, Wasserabscheider und Rückflußkühler wurden 206 g (2,0 mol) Diäthylentriamin vorgelegt und zuerst 568 g (1,0 mol) Dimerfettsäure FS1, dann 39 g einer 75%igen wäßrigen Phosphorsäurelösung (0,3 mol) unter Rühren zugeben. Unter Ausnutzung der auftretenden Exothermie wurde innerhalb von vier Stunden auf 205 °C geheizt. (beginnende Wasserabscheidung ab etwa 140 °C). Man hielt noch so lange bei 205 °C, bis 47 g Wasser-Destillat abgeschieden waren.

Die Reaktionslösung wurde auf 100 °C abgekühlt, dann zuerst mit Methoxypropanol auf 80 % und anschließend weiter portionsweise mit Wasser auf 45 % Festkörper-Massenanteil verdünnt.

Eigenschaften der Härterlösung:

| Dynamische Viskosität bei 23 °C | 7400 mPa·s |
| spezifischer Gehalt an Amin-Wasserstoffatomen | 3,2 mol/kg (berechnet) |
| (sog. "HAV", Masse bezogen auf die Stoffmenge von Amin-Wasserstoffatomen | 311 g/mol) |

Der Härter H8 wurde analog zu H7 hergestellt, wobei das Polyamidoamin ein Kondensat aus Triäthylentetramin und einem Gemisch aus Fettsäuren FS1 und FS2 mit einer Funktionalität unter 2 war.

**Beispiel H9** (Umsetzung mit Phosphorsäureester PE1)

Es wurde zur Synthese des Polyamidoamins wie in Beispiel H7 verfahren, jedoch ohne Zugabe von Phosphorsäure. Nachdem bei 205 °C insgesamt 36 g Wasser-Destillat abgeschieden waren, wurde auf 170 °C abgekühlt, 47 g (0,3 mol) des Phosphorsäureesters PE1zugegeben und noch 2 h bei dieser Temperatur gerührt. Während der gesamten Reaktion war die Masse problemlos rührbar. Das noch anfallende Kondensat wurde abgetrennt und verworfen.

Nach Abkühlen auf 100 °C wurde zuerst mit Methoxypropanol auf 80 % und anschließend weiter portionsweise mit Wasser auf 45 % Festkörper-Massenanteil verdünnt.

Eigenschaften der Härterlösung:

| Dynamische Viskosität bei 23 °C | 6800 mPa·s |
| spezifischer Gehalt an Amin-Wasserstoffatomen | 2,8 mol/kg (berechnet) |
| (sog. "HAV", Masse bezogen auf die Stoffmenge von Amin-Wasserstoffatomen | 358 g/mol) |

Tabelle 1     Wäßrige Epoxidharz-Härter H1 bis H9

| Bsp. | Amin | | | Epoxidharz | | | Fettsäure | | | Phosphorsäurederivat | | | dest. Wasser | | Harz | HAV (bezogen auf Festharz) | spezifischer NH-Gehalt | Festkörper-Massenanteil |
|---|---|---|---|---|---|---|---|---|---|---|---|---|---|---|---|---|---|---|
| | $m$ in g | $n$ in mol | Art | $m$ in g | $n$(EP) in mol | Art | $m$ in g | $n$ in mol | Art | $m$ in g | $n$ in mol | Art | $m$ in g | $n$ in mol | $m$ in g | in g/mol | $n$(NH)/$m$ in mol/kg | in % |
| H1 | 206 | 2 | DETA | 380 | 2 | EP1 | | | | 32 | 0,2 | PE1 | | | 618 | 81 | 12,3 | 50 |
| H2 | 206 | 2 | DETA | 950 | 2 | EP2 | | | | 55 | 0,35 | PE1 | | | 1211 | 166 | 6 | 44 |
| H3 | 120 | 2 | EDA | 380 | 2 | EP1 | | | | 74 | 0,3 | PE2 | | | 574 | 106 | 9,4 | 48 |
| H4 | 206 | 2 | DETA | 380 | 2 | EP1 | | | | 24 | 0,25 | PS | -9 | -0,5 | 601 | 109 | 9,2 | 45 |
| H5 | 292 | 2 | TETA | 380 | 2 | EP1 | | | | 74 | 0,3 | PE2 | | | 746 | 79 | 12,7 | 45 |
| H6 | 292 | 2 | TETA | 190 320 | 1,0 1,0 | EP1 EP3 | | | | 47 | 0,3 | PE1 | | | 849 | 90 | 11,1 | 52 |
| H7 | 206 | 2 | DETA | | | | 568 | 1 | FS1 | 29 | 0,3 | PS | -47 | -2,6 | 756 | 140 | 7,1 | 45 |
| H8 | 292 | 2 | TETA | | | | 426 140 | 0,75 0,5 | FS1 FS2 | 24 | 0,25 | PS | -45 | -2,5 | 837 | 112 | 8,9 | 47 |
| H9 | 206 | 2 | DETA | | | | 568 | 1 | FS1 | 47 | 0,3 | PE1 | -36 | -2 | 871 | 161 | 6,2 | 45 |

EP 1 316 574 B1

**Anwendungstechnische Prüfung**

Die vorstehend beschriebenen, in Tabelle 1 aufgelisteten wäßrigen Aminhärter H1 bis H9 wurden mit einer wäßrigen Epoxidharzemulsion kombiniert und mit weiterem Wasser auf eine Applikationsviskosität von etwa 3000 mPa·s eingestellt. Als wäßrige Epoxidharzemulsion wurde in allen Fällen ®Beckopox EP 384w/53WAMP (Solutia Germany GmbH & Co. KG, Festkörper-Massenanteil 53 %, spezifischer Epoxidgruppen-Gehalt bezogen auf die Masse des Festharzes 1,92 mol/kg ("Epoxid-Äquivalentgewicht" 520 g/mol)) gewählt.

Das stöchiometrische Verhältnis Härter/Epoxidharz wurde so eingestellt, daß das Verhältnis der Stoffmenge der aktiven Aminwasserstoffatome zu der der Epoxidgruppen 0,75 mol / 1 mol betrug. Ein stöchiometrischer Unterschuß an Härter in diesem Ausmaß ist für die Formulierung von Korrosionsschutzsystemen in der Praxis üblich.

Als wasserverdünntes Vergleichssystem wurde eine Kombination von ®Beckopox EH 613 w (Solutia Germany GmbH & Co. KG, Polyamidoamin, spezifischer Gehalt an aktiven Aminwasserstoffatomen 8,62 mol/kg ("NH-aktiv-Äquivalentgewicht" = 116 g/mol)) mit ®Beckopox EP 384w/53WAMP gewählt.

Als lösemittelverdünntes Vergleichssystem wurde eine Kombination von ®Beckopox EH 651 (Solutia Germany GmbH & Co. KG, Polyamidoamin, spezifischer Gehalt an aktiven Aminwasserstoffatomen 5,62 mol/kg ("NH-aktiv-Äquivalentgewicht" = 178 g/mol)) mit ®Beckopox EP 301/75% in Xylol (Solutia Germany GmbH & Co. KG, spezifischer Epoxidgruppen-Gehalt bezogen auf die Masse des Festharzes 2,04 mol/kg; ("Epoxid-Äquivalentgewicht" 490 g/mol)) verwendet.

Die Verdünnung auf Applikationsviskosität erfolgte in diesem Fall mit Xylol.

Die auf diese Weise hergestellten Klarlacke wurden mit einer 200 μm-Rakel auf kaltgewalztes Stahlblech aufgetragen.

Nach einer Lagerzeit von 1 Woche bei Umgebungstemperatur wurden die beschichteten Bleche kreuzförmig bis zum Blech durchgeritzt und einem Salzsprühtest nach DIN 53 167 unterworfen.

Es zeigt sich, daß die erfindungsgemäßen Härter einen erheblich besseren Korrosionsschutz im Vergleich zu bekannten wäßrigen Systemen ergeben. Das Eigenschaftsniveau von in Lösungsmitteln gelösten Systemen wird erreicht.

| Beispiel | ®Beckopox EP 384 mit Härter: | Trockenfilmdicke in $\mu$m | Fläche | Topfzeit + in h | Pendelhärte nach 1 Woche in s | Rostgrad * nach 2 Wochen | Unterwanderung # am Schnitt nach 2 Wochen in mm |
|---|---|---|---|---|---|---|---|
| 1 | H1 | 50 | i. O. | 2,0 | 73 | 1 | 7 |
| 2 | H2 | 48 | i. O. | 2,5 | 84 | 2 | 9 |
| 3 | H3 | 47 | i. O. | 3,0 | 66 | 1 | 5 |
| 4 | H4 | 51 | i. O. | 2,5 | 80 | 2 | 5 |
| 5 | H5 | 49 | i. O. | 2,5 | 56 | 2 | 6 |
| 6 | H6 | 49 | i. O. | 3,5 | 54 | 2 | 13 |
| 7 | H7 | 47 | i. O. | 2,5 | 60 | 2 | 10 |
| 8 | H8 | 50 | i. O. | 3,25 | 53 | 1 | 11 |
| 9 | H9 | 48 | i. O. | 2,5 | 58 | 2 | 8 |
| Vergleich (Wasser-verdünnt) | Beckopox EH 613 w | 49 | i.O. | 1,5 | 90 | 4-5 | Totale Ablösung |
| Vergleich (Lösemittel-verdünnt) | ®Beckopox EP 301 mit ®Beckopox EH 651 | 48 | i. O. | 6 (Viskositäts-anstieg auf das Doppelte der Ausgangs-viskosität.) | 77 | 2 | 8 |

+Bestimmung der Topfzeit (pot life)   als Zeit nach dem Mischen von Harz und Härter, innerhalb der nach dem Aufziehen auf das Substrat ein Glanzabfall beobachtet wird. (Bei wässrigen Systemen ist das Ende der Topfzeit oft nicht durch einen Anstieg der Viskosität erkennbar).

* Bestimmung des Rostgrades   nach Salzsprühtest (DIN 53 167), dabei bedeuten 1: vereinzelt Rostflecken; 2: ca. 20% der Fläche Rostflecken; 3: ca. 40% der Fläche Rostflecken, 4: > 50% der Fläche Rostflecken, 5: ganze Fläche rostig.

# Bestimmung der Unterwanderung in mm   nach Salzsprühtest (DIN 53 167)

0-0-0-0-0

**Patentansprüche**

1. Wäßrige Härter für wäßrige Epoxidharzdispersionen, **dadurch gekennzeichnet, daß** sie Mischungen, Additionsprodukte und/oder Salze enthalten von teilweise veresterten Phosphorsäuren **A1** oder teilweise veresterten organischen Phosphonsäuren **A2** mit organischen Aminen **B** mit mindestens einer primären Aminogruppe ausgewählt aus Epoxid-Amin-Addukten **B1,** Mannich-Basen **B2,** Polyaminoamiden **B3** und Kondensationsprodukten **B4** von Di- oder Polyaminen **B42** mit Di- oder Polyhydroxyaromaten **B41,** wobei die Phosphor- bzw. Phosphonsäuren jeweils mindestens ein acides Wasserstoffatom und einen Rest des Veresterungsalkohols je Molekül enthalten.

2. Wäßrige Härter gemäß Anspruch 1, **dadurch gekennzeichnet, daß** die Mengenverhältnisse der Komponenten **A** und **B** so gewählt werden, daß das Verhältnis der Stoffmenge der primären Aminogruppen in **B** zur Stoffmenge der Komponente **A** 1 : 0,1 bis 1 : 0,5 mol/mol beträgt.

3. Wäßrige Härter gemäß Anspruch 1, **dadurch gekennzeichnet, daß** das Epoxid-Amin-Addukt **B1** Bausteine enthält abgeleitet von aliphatischen oder aromatischen Epoxidharzen **B11** mit einem spezifischen Gehalt an Epoxidgruppen von 0,2 bis 7 mol/kg und von aliphatischen Aminen **B12** mit mindestens zwei primären Aminogruppen.

4. Wäßrige Härter nach Anspruch 3, **dadurch gekennzeichnet, daß** die Epoxidharze **B11** ausgewählt sind aus Epoxidharzen auf Basis von Bisphenol A, Bisphenol F, deren Mischungen, und auf Basis von Polypropylenglykol.

5. Wäßrige Härter nach Anspruch 1, **dadurch gekennzeichnet, daß** die Mannich-Base **B2** Bausteine enthält abgeleitet von einem oder mehreren mit $C_1$- bis $C_{10}$-Alkylgruppen substituierten Phenolen **B21,** Formaldehyd **B22,** und von einem oder mehreren mehrfunktionellen Aminen **B23**.

6. Wäßrige Härter nach Anspruch 5 **dadurch gekennzeichnet, daß** die Phenole **B21** ausgewählt sind aus Phenol, den Alkylphenolen o-, m- und p-Kresol, 2,4-Xylenol, p-tert.-Butylphenol, p-Nonylphenol, sowie Bis-(4-hydroxyphenyl)methan, Bisphenol A, 3,3',5,5'-Tetramethylbisphenol A, und Resorcin.

7. Wäßrige Härter nach Anspruch 6 **dadurch gekennzeichnet, daß** die Amine **B23** ausgewählt sind aus diprimären linearen, verzweigten und cyclischen aliphatischen Diaminen und araliphatischen Diaminen, bei denen die Aminogruppen mit aliphatischen C-Atomen verbunden sind.

8. Wäßrige Härter nach Anspruch 1, **dadurch gekennzeichnet, daß** das Polyamidoamin **B3** Bausteine enthält abgeleitet von mehrbasigen aliphatischen Dicarbonsäuren **B32** mit aliphatischen Di- oder Polyaminen **B31,** wobei die Zahl der zum Amid kondensierbaren Aminogruppen die der Carboxylgruppen übersteigt.

9. Wäßrige Härter nach Anspruch 8, **dadurch gekennzeichnet, daß** die Dicarbonsäuren **B32** dimerisierte Fettsäuren enthalten, die durch Polymerisation von ungesättigten Fettsäuren mit 12 bis 26 Kohlenstoffatomen erhältlich sind.

10. Wäßrige Härter nach Anspruch 1, **dadurch gekennzeichnet, daß** die Polyhydroxyaromaten **B41** ausgewählt sind aus Dihydroxyaromaten.

11. Wäßrige Härter nach Anspruch 1, **dadurch gekennzeichnet, daß** die Amine **B42** ausgewählt sind aus diprimären linearen, verzweigten und cyclischen aliphatischen Diaminen und araliphatischen Diaminen, bei denen die Aminogruppen mit aliphatischen C-Atomen verbunden sind, den Epoxid-Amin-Addukten **B1** und den Polyamidoaminen **B3**.

12. Wäßrige Härter nach Anspruch 1, **dadurch gekennzeichnet, daß** die teilweise veresterten Phosphorsäuren **A1** ein acides H-Atom aufweisen, das direkt oder über ein Sauerstoffatom an Phosphoratom gebunden ist, und mindestens eine Gruppierung der Art R-O- P, wobei R ein lineares, verzweigtes oder cyclisches Alkyl- oder Aryl-Radikal mit 1 bis 20 Kohlenstoffatomen bedeutet, das auch ätherartig gebundenen Sauerstoff in der Kette enthalten kann, und die Phosphorsäuren ausgewählt sind aus ortho-Phosphorsäure $H_3PO_4$, der Diphosphorsäure $H_4P_2O_7$, der Triphosphorsäure $H_5P_3O_{10}$ und den höheren Homologen (Oligomeren), der phosphorigen Säure $H_3PO_3$, der diphosphorigen Säure $H_4P_2O_5$ sowie deren höheren Homologen, sowie der unterphosphorigen Säure $H_3PO_2$ und deren höheren Homologen.

13. Wäßrige Härter nach Anspruch 1, **dadurch gekennzeichnet, daß** die Phosphonsäuren **A2** ein acides H-Atom aufweisen, das direkt oder über ein Sauerstoffatom an das Phosphoratom gebunden ist, und mindestens eine Gruppierung der Art R-O- P, wobei R ein lineares, verzweigtes oder cyclisches Alkyl- oder Aryl-Radikal mit 1 bis 20 Kohlenstoffatomen bedeutet, das auch ätherartig gebundenen Sauerstoff in der Kette enthalten kann, und die Phosphonsäuren ausgewählt sind aus Alkanphosphonsäuren $R^1$-$PO_3H_3$, aromatische Phosphonsäuren $R^2$-$PO_3H_3$, und die entsprechenden Phosphonigsäuren $R^1$-$PO_2H_2$ und $R^2$-$PO_2H_2$, wobei $R^1$ ein linearer, verzweigter oder cyclischer Alkylrest mit 1 bis 20 Kohlenstoffatomen ist, und $R^2$ ein gegebenenfalls substituierter aromatischer Rest mit 6 bis 20 Kohlenstoffatomen ist.

14. Verwendung von wäßrigen Härtern nach Anspruch 1 in Mischung mit wäßrigen Epoxidharz-Dispersionen zur Herstellung von Beschichtungsmitteln durch Mischen der Härter mit den Epoxidharz-Dispersionen, wobei das Verhältnis der Stoffmenge an Aminwasserstoffatomen im Härter zu der Stoffmenge an Epoxidgruppen im Harz ca. 0,7 bis 0,85 mol/mol beträgt.

15. Wäßrige Beschichtungsmittel, enthaltend wäßrige Härter nach Anspruch 1.

## Claims

1. An aqueous curing agent for aqueous epoxy resin dispersions which comprises mixtures, adducts and/or salts of partly esterified phosphoric acids **A1** or partly esterified organic phosphonic acids **A2** with organic amines **B** containing at least one primary amino group which are selected from the group consisting of epoxide-amine adducts **B1,** Mannich bases **B2,** polyaminoamides **B3**, and condensation products **B4** of diamines or polyamines **B42** with di- or polyhydroxyaromatics **B41**, the phosphoric and phosphonic acids each containing at least one acidic hydrogen atom and one radical of the esterifying alcohol per molecule.

2. The aqueous curing agent as claimed in claim 1, wherein the proportions of the components **A** and **B** are chosen such that the ratio of the amount of substance of the primary amino groups in **B** to the amount of substance of component **A** is from 1:0.1 to 1:0.5 mol/mol.

3. The aqueous curing agent as claimed in claim 1, wherein the epoxide-amine adduct **B1** comprises units derived from aliphatic or aromatic epoxy resins **B11** having a specific epoxide group content of from 0.2 to 7 mol/kg and from aliphatic amines **B12** having at least two primary amino groups.

4. The aqueous curing agent as claimed in claim 3, wherein the epoxy resins **B11** are selected from the group consisting of epoxy resins based on bisphenol A, bisphenol F, mixtures thereof, and those based on polypropylene glycol.

5. The aqueous curing agent as claimed in claim 1, wherein the Mannich base **B2** comprises units derived from one or more $C_1$ to $C_{10}$ alkyl-substituted phenols **B21**, formaldehyde **B22,** and from one or more polyfunctional amines **B23.**

6. The aqueous curing agent as claimed in claim 5, wherein the phenols **B21** are selected from phenol, the alkylphenols o-, m- and p-cresol, 2,4-xylenol, p-tert-butylphenol, p-nonylphenol, and bis(4-hydroxyphenyl)methane, bisphenol A, 3,3',5,5'-tetramethylbisphenol A, and resorcinol.

7. The aqueous curing agent as claimed in claim 6, wherein the amines **B23** are selected from diprimary linear, branched, and cyclic aliphatic diamines and araliphatic diamines in which the amino groups are connected to aliphatic carbon atoms.

8. The aqueous curing agent as claimed in claim 1, wherein the polyamidoamine **B3** comprises units derived from polybasic aliphatic dicarboxylic acids **B32** with aliphatic diamines or polyamines **B31**, the number of amino groups which can be condensed to form the amide exceeding that of the carboxyl groups.

9. The aqueous curing agent as claimed in claim 8, wherein the dicarboxylic acids **B32** comprise dimerized fatty acids which are obtained by polymerizing unsaturated fatty acids having from 12 to 26 carbon atoms.

10. The aqueous curing agent as claimed in claim 1, wherein the polyhydroxyaromatics **B41** are selected from dihydroxyaromatics.

**11.** The aqueous curing agent as claimed in claim 1, wherein the amines **B42** are selected from diprimary, linear, branched, and cyclic aliphatic diamines and araliphatic diamines in which the amino groups are connected to aliphatic carbon atoms, from the epoxide-amine adducts **B1,** and from the polyamidoamines **B3**.

**12.** The aqueous curing agent as claimed in claim 1, wherein the partly esterified phosphoric acids **A1** have an acidic hydrogen atom which is attached directly or via an oxygen atom to phosphorus atom, and at least one group of the kind R-O-P, where R denotes a linear, branched or cyclic alkyl or aryl radical which has from 1 to 20 carbon atoms and may also contain ethereally bonded oxygen in the chain, and the phosphoric acids are selected from orthophosphoric acid $H_3PO_4$, diphosphoric acid $H_4P_2O_7$, triphosphoric acid $H_5P_3O_{10}$, and the higher homologs (oligomers), phosphorous acid $H_3PO_3$, diphosphorous acid $H_4P_2O_5$, and also the higher homologs thereof, and also hypophosphorous acid $H_3PO_2$ and its higher homologs.

**13.** The aqueous curing agent as claimed in claim 1, wherein the phosphonic acids **A2** have an acidic hydrogen atom which is attached directly or via an oxygen atom to the phosphorus atom, and at least one group of the kind R-O-P, where R denotes a linear, branched or cyclic alkyl or aryl radical which has from 1 to 20 carbon atoms and may also contain ethereally bonded oxygen in the chain, and the phosphonic acids are selected from alkanephosphonic acids $R^1$-$PO_3H_3$, aromatic phosphonic acids $R^2$-$PO_3H_3$, and the corresponding phosphonous acids $R^1$-$PO_2H_2$ and $R^2$-$PO_2H_2$, $R^1$ being a linear, branched or cyclic alkyl radical having from 1 to 20 carbon atoms and $R^2$ being an optionally substituted aromatic radical having from 6 to 20 carbon atoms.

**14.** The use of an aqueous curing agent as claimed in claim 1 in a mixture with aqueous epoxy resin dispersions for preparing coating compositions, comprising mixing the curing agent with the epoxy resin dispersions, the ratio of the amount of substance of amine hydrogen atoms in the curing agent to the amount of substance of epoxide groups in the resin being from about 0.7 to 0.85 mol/mol.

**15.** Aqueous coating compositions comprising aqueous curing agent as claimed in claim 1.


**Revendications**

**1.** Durcisseurs aqueux pour dispersions aqueuses de résines époxydes, **caractérisés en ce qu'**ils contiennent des mélanges, des produits d'addition et/ou des sels d'acides phosphoriques partiellement estérifiés A1 ou d'acides phosphoniques organiques partiellement estérifiés A2 avec des amines organiques B ayant au moins un groupe amino primaire, choisies parmi les adduits époxyde-amine B1, les bases de Mannich B2, les polyaminoamides B3 et les produits de condensation B4 de diamines ou de polyamines B42 avec des composés di- ou polyhydroxyaromatiques B41, les acides phosphoriques ou les acides phosphoniques contenant chacun au moins un atome d'hydrogène acide et un résidu de l'alcool d'estérification par molécule.

**2.** Durcisseurs aqueux selon la revendication 1, **caractérisés en ce que** les rapports pondéraux entre les composants A et B sont choisis de façon que le rapport entre la quantité des groupes amino primaires de B et la quantité du composant A soit de 1:0,1 à 1:0,5 mole/mole.

**3.** Durcisseurs aqueux selon la revendication 1, **caractérisés en ce que** l'adduit époxyde-amine contient des éléments structuraux B1, qui dérivent de résines époxydes aliphatiques ou aromatiques B11 ayant une teneur spécifique en groupes époxy de 0,2 à 7 moles/kg, et d'amines aliphatiques B12 ayant au moins deux groupes amino primaires.

**4.** Durcisseurs aqueux selon la revendication 3, **caractérisés en ce que** les résines époxydes B11 sont choisies parmi les résines époxydes à base de bisphénol A, de bisphénol F, de mélange de ceux-ci, et à base de polypropylèneglycol.

**5.** Durcisseurs aqueux selon la revendication 1, **caractérisés en ce que** la base de Mannich B2 contient des éléments structuraux qui dérivent d'un ou plusieurs phénols B21, substitués par des groupes alkyle en $C_1$ à $C_{10}$, d'un formaldéhyde B22, et d'une ou plusieurs polyamines B23.

**6.** Durcisseurs aqueux selon la revendication 5, **caractérisés en ce que** les phénols B21 sont choisis parmi le phénol, les alkylphénols, l'o-, le m- et le p-crésol, le 2,4-xylénol, le p-tert-butylphénol, le p-nonylphénol, ainsi que le bis (4-hydroxyphényl)méthane, le bisphénol A, le 3,3',5,5'-tétraméthylbisphénol A et le résorcinol.

**7.** Durcisseurs aqueux selon la revendication 6, **caractérisés en ce que** les amines B23 sont choisies parmi les diamines aliphatiques diprimaires à chaîne droite ou ramifiée, et cyclique, et les diamines araliphatiques dans lesquelles les groupes amino sont reliés à des atomes de carbone aliphatiques.

**8.** Durcisseurs aqueux selon la revendication 1, **caractérisés en ce que** la polyamidoamine B3 contient des éléments structuraux qui dérivent d'acides dicarboxyliques aliphatiques polybasiques B32 avec des diamines ou polyamines aliphatiques B31, le nombre des groupes amino pouvant être condensé en amide étant supérieur à celui des groupes carboxyle.

**9.** Durcisseurs aqueux selon la revendication 8, **caractérisés en ce que** les acides dicarboxyliques B32 contiennent des acides gras dimérisés, qui peuvent être obtenus par polymérisation d'acides gras insaturés ayant de 12 à 26 atomes de carbone.

**10.** Durcisseurs aqueux selon la revendication 1, **caractérisés en ce que** les composés polyhydroxyaromatiques B41 sont choisis parmi les composés dihydroxyaromatiques.

**11.** Durcisseurs aqueux selon la revendication 1, **caractérisés en ce que** les amines B42 sont choisies parmi les diamines aliphatiques diprimaires à chaîne droite ou ramifiée et cycliques, et les diamines araliphatiques dans lesquelles les groupes amino sont reliés à des atomes de carbone aliphatiques, les adduits époxyde-amine B1, et les polyamidoamines B3.

**12.** Durcisseurs aqueux selon la revendication 1, **caractérisés en ce que** les acides phosphoriques partiellement estérifiés A1 comportent un atome d'hydrogène acide, qui est lié à l'atome de phosphore directement ou par l'intermédiaire d'un atome d'oxygène, et au moins un groupement du type R-O- P dans lequel R est un radical alkyle ou aryle à chaîne droite ou ramifiée ou cyclique ayant de 1 à 20 atomes de carbone, qui peut aussi contenir dans la chaîne un atome d'oxygène lié par une liaison éther, et les acides phosphoriques sont choisis parmi l'acide orthophosphorique $H_3PO_4$, l'acide disphosphorique $H_4P_2O_7$, l'acide triphosphorique $H_5P_3O_{10}$ et les homologues supérieurs (oligomères) de l'acide phosphoreux $H_3PO_3$, de l'acide diphosphoreux $H_4P_2O_5$, ainsi que de leurs homologues supérieurs, ainsi que de l'acide hypophosphoreux $H_3PO_2$ et de ses homologues supérieurs.

**13.** Durcisseurs aqueux selon la revendication 1, **caractérisés en ce que** les acides phosphoniques A2 comprennent un atome d'hydrogène acide qui est lié à l'atome de phosphore directement ou par l'intermédiaire d'un atome d'oxygène, et au moins un groupement du type R-O- P dans lequel R est un radical alkyle ou aryle à chaîne droite ou ramifiée ou cyclique ayant de 1 à 20 atomes de carbone, qui peut aussi contenir dans la chaîne un atome d'oxygène lié par une liaison éther, et les acides phosphoniques sont choisis parmi les acides alcanephosphoniques $R^1$-$PO_3H_3$, les acides phosphoniques aromatiques $R^2$-$PO_3H_3$, et les acides phosphoneux correspondants $R^1$-$PO_2H_2$ et $R^2$-$PO_2H_2$, où $R^1$ est un radical alkyle à chaîne droite ou ramifiée ou cyclique ayant de 1 à 20 atomes de carbone, et $R^2$ est un radical aromatique éventuellement substitué et ayant de 6 à 20 atomes de carbone.

**14.** Utilisation de durcisseurs aqueux selon la revendication 1 en mélange avec des dispersions aqueuses de résines époxydes pour préparer des compositions de revêtement par mélange des durcisseurs avec des dispersions de résines époxydes, le rapport entre la quantité des atomes d'hydrogène d'amine dans le durcisseur et la quantité des groupes époxy dans la résine étant d'environ 0,7 à 0,85 mole/mole.

**15.** Compositions aqueuses de revêtement contenant des durcisseurs aqueux selon la revendication 1.